# EUROPEAN PATENT APPLICATION

(11) **EP 2 759 955 A1**
(43) Date of publication of application: **30.07.2014**
(21) Application number: 13368035.5
(22) Date of filing: 20.09.2013
(51) Int. Cl.: G06F 21/53, G06F 21/57

(54) **Secure backup and restore of protected storage**

(30) Priority: 28.01.2013 EP 13305092
(71) Applicant: ST-Ericsson SA, 1228 Plan-les-Ouates (CH)
(72) Inventor: Sibert, Hervé, 72000 Le Mans (FR)
(74) Representative: Hutchinson, Thomas Owen

(57) **Abstract**

A method of backing-up Trusted Execution Environment data (TEE data) to a memory under the control of a Rich Execution Environment (REE memory) characterised by: the TEE comprising a TEE encryption key that is only accessible to the TEE; and by the steps of the TEE encrypting TEE data to be backed up using the TEE key and storing the encrypted data in the REE memory.

## Description

This invention relates to a method of securely backing up and restoring protected data. The invention is applicable in particular, but without limitation, to Integrated Circuits (IC) that are used in wireless products, such as mobile terminal devices (e.g. cell phones, smart phones, etc.), portable digital media players (e.g. MP3 and MP4 players), portable computers, wireless tablets, portable navigation systems, portable gaming devices, etc.

The system architecture of many modern electronic devices is multi-layered, that is to say, having a user-accessible application layer or rich operating system (rich OS) and an underlying system layer where secure processes are run. The separation of these layers is of great importance where, for example, the application layer or rich OS is susceptible to corruption by malware and virus software. By separating the core system functions of the device from the user-accessible interface, the system is less vulnerable to corruption and malware attacks.

Ideally, the system and rich OS layers are physically separated, that is to say, with each having its own processor, memory, hardware, and so on. However, such an approach is neither practical nor cost-effective and so it is usual to provide virtual separation between the layers to reduce duplication of hardware and redundancy.

One approach to virtual separation involves creating a Trusted Execution Environment (TEE), which is essentially a secure operating system that operates in parallel with a user-accessible, or rich operating system (such as Android^{RTM}), which shares various resources with the rich operating system or a Rich Execution Environment (REE). For example, the processor and system executing the TEE ensures that the resources used by the TEE during runtime are properly isolated from the rich operating system. Such resources may include the processing core, the processor registers and the volatile memory (e.g., cache memory, on-chip (eSRAM) and/or off-chip (DDR) memory) that the TEE uses, and some peripherals such as system registers, cryptographic engines and so forth.

A convenient hardware base to build a TEE is, for instance, the ARM^{RTM} TrustZone^{RTM} platform, which divides the processor core into two virtual processors, namely one secure processor running the TEE, and the other non-secure processor running the rich OS. This technology, when properly implemented on a system-on-chip (SoC) and extended with memory protections and access control on peripherals, ensures that the TEE executed by the processor in secure mode is properly isolated from the rich OS.

As mentioned previously, and primarily for cost reasons, many peripherals of the device can be shared by the TEE and the rich OS. This is especially the case for non-volatile memory, such as an eMMC flash memory, which is usually under control from the Rich OS for performance reasons. The TEE, in order to store data on the non-volatile memory, must first protect these data using cryptographic means to ensure confidentiality and integrity, before passing the data to a companion within the rich OS that stores these preliminarily protected data in the non-volatile memory.

In some implementations, the TEE has exclusive access to a small portion of non-volatile memory (such as a dedicated flash memory) which allows the TEE to store some reference values that bind to the TEE data stored in the rich OS non-volatile memory, but not the data themselves as they are too large to fit on the dedicated flash memory.

As such, a situation can arise whereby TEE data are stored in the rich OS's non-volatile storage. Whilst the TTE data stored in the rich OS's non-volatile storage are protected by encryption, there is nothing to prevent the encrypted data from being deleted, modified or otherwise corrupted by the rich OS, either via unintentional user action, or by the action of malware executed in the rich OS. Whilst such tampering or corruption may not breach security, the TTE can be adversely affected, or at worst, rendered inoperative, if critical system data stored temporarily, or permanently, within the rich OS's non-volatile memory becomes corrupted.

Moreover, whilst the cryptographic protections operating within the TEE, or between the TEE and rich OS may be able to detect such corruptions, they cannot, by themselves, restore the data.

The aforementioned implementation differs from certain other security environments, such as smartcards, in which the non-volatile storage is exclusively under the control of the secure environment, and is thus virtually proof against tampering attempts.

The industry consortium GlobalPlatform defines such a TEE, as well as the interfaces it provides to so-called "Trusted Applications" executing on top of the TEE. These interfaces include an API to store data. The specifications are available online at, for example, http://www.globalplatform.org/specificationsdevice.asp.

One major defect in the aforementioned standard is the absence of a recovery mechanism to safeguard against the TEE data stored in the non-volatile storage becoming corrupted or deleted.

The implementations described above could be pursued, but are not necessarily approaches that have been previously conceived or pursued. Therefore, unless otherwise indicated herein, the approaches described hereinabove are not prior art to the claims in this application and are not admitted to be prior art by inclusion in this section.

One possible solution to the problem of TEE data corruption is to implement a backup and restore procedure. Backup and restore, or even synchronisation of multiple copies of data to preserve integrity is, in and of itself, well-known. In the case of a multi-layer TEE-rich OS implementation, such as that described above, restoration of backed-up data can be accomplished simply by overwriting corrupted data with uncorrupted backup data. However, this approach only works where the TEE storage has been backed up, and has not been modified further after backup, before it was corrupted and corruption was detected. In such a situation, from the TEE's standpoint, it will be just as if the corruption never had occurred.

In reality, however, these criteria cannot be guaranteed and it is more likely than not that a corruption would occur to data that had not just been backed up (in which case, the "correct" data differs from the backup version) or that some time will have elapsed between the changes and detection of corruption (in which case, the versioning or time-stamp of the restoration data will not correctly tally from the TEE's perspective, and will be rejected). Specifically, if one has an older backup of the TEE storage and replaces the current TEE data in the flash controlled by the Rich OS with this older backup, then the TEE may be able to detect that the backup is obsolete by using the reference values in the exclusive non-volatile storage under its control, and the TEE will then refuse to use these data.

A need therefore exists for any one or more of the group comprising: a solution to one or more of the above problems; a means to backup and restore TEE data stored in non-volatile memory of a rich OS; and improved or alternative backup and restore implementation for a multi-layer system comprising a TEE and a rich OS. This invention therefore proposes a secure system or implementation to facilitate or enable the recovery of TEE storage that has been corrupted or deleted. This system or implementation may also be used to transfer the storage from the TEE of one device to the TEE of another device.

A first aspect of the invention relates to a method of managing a secure storage which includes:

Backup creation: the end-user creates a data set that is cryptographically protected - the data are encrypted in a way such that only the TEE on the specific target device is able to decrypt the data. This creation may, for example, involve the origin and/or the target TEE (in case of transfer), or may be performed solely by a Rich OS application; and/or

A restore operation: the end-user pushes the data to the target TEE using an agent running in the Rich OS, the TEE authenticates the data, and finally the TEE creates the different objects corresponding to these data in its storage, as long as the modifications are compliant with the security policy of the TEE and of its Trusted Applications.

A second aspect of the present invention relates to a computer program product comprising one or more stored sequences of instructions that are accessible to a processor and which, when executed by the processor, cause the processor to carry out the steps of the method of the first aspect.

A third aspect of the present invention relates to an apparatus having means for implementing the steps of the method of the first aspect.

A fourth aspect of the invention relates to a user device, for example a wireless device comprising an apparatus according to the third aspect. Examples of such wireless devices include those listed in the introduction of the present description.

A fifth aspect of the invention provides a method of backing up TEE data in REE memory under the control of a REE, wherein the TEE comprises a TEE encryption key that is only accessible to the TEE, and wherein the TEE encrypts TEE data to be backed up using the TEE key and stores the encrypted data in the REE memory.

As such, the data that is stored in the REE memory is only decryptable by the TEE using the TEE key.

Restoration of the backed-up TEE data is suitably performed by granting to the TEE read access to backed-up data in the REE memory, and by be TEE copying selected encrypted data to the TEE and decrypting it using the TEE key. As such, the TEE data is, and remains, encrypted whilst it resides in the REE and is decrypted only when it resides in the TEE.

It will be appreciated that the invention permits and/or facilitates the secure backup and/or restoration of TEE data to, or from, respectively, a REE memory using an encryption key accessible only to the TEE.

The TEE key is suitably device-specific, such that encrypted TEE data can only be read by, or restored to, the same TEE that encrypted and/or backed it up.

A sixth aspect of the invention provides a method of backing-up Trusted Execution Environment data (TEE data) to a memory under the control of a Rich Execution Environment memory (REE memory) comprising the steps of: encrypting the TEE data to be backed-up in the form of binary objects encrypted using a TEE key, which TEE key is available only to the TEE. Suitably, the method may additionally comprise the steps of: integrity-protecting the binary objects using a MAC function that binds the TEE data with a version number using the TEE key; storing the MAC value and the encrypted TEE data in the REE memory; storing the version number in a TEE memory that is accessible only to the TEE; and creating a backup of the TEE data by copying the encrypted TEE data, MAC values and version numbers obtained from the TEE to the REE memory.

Suitably, the TEE data is encrypted using a key derived from the TEE key, rather than using the TEE key itself. This additional step preserves the confidentiality of the TEE key, which can be a permanent key associated with the specific TEE, e.g. by hard-coding the TEE key at the time of device manufacture.

The backup is suitably created using a companion application executed in the REE.

The method may further comprise the step of restoring the data by: an application in the REE granting read access to the TEE of the encrypted TEE data, MAC values and version numbers obtained from the TEE stored in the REE memory; the TEE validating the backed-up TEE data by checking that all of the MAC values are correct and correspond to the encrypted TEE data; and the TEE restoring selected data in the TEE memory be decrypting the backed-up TEE data in the REE memory using the TEE key and by copying the said selected data to the TEE memory.

Suitably, the selected data may comprise all of the backed-up TEE data. Alternatively, the TEE may restore only data for Trusted Applications whose data must be restored and is allowed to be restored. This is suitably accomplished by the TEE verifying the objects from the backup that belong to a particular Trusted Application, deleting all of the data in the TEE memory for the said Trusted Application, creating and storing an object for the said Trusted Application, using the MAC value and the version number from the backup. Using the MAC value and version number suitably avoids security issues due to collisions.

Additionally or alternatively, for Trusted Applications whose data cannot be restored, the TEE can either delete the Trusted Application data, or leaves them untouched, depending on the end-user choice. The user choice is suitably user-selectable in a companion application of the REE.

By virtue of the invention, if an attacker from the rich OS modifies the data and/or the MAC value, this will be detected by the TEE when reading back the data and the MAC. Similarly, if an attacker replaces these data and value with old, valid values, this will be detected by the TEE by using the version number. There are several other ways to protect the data with the same security properties, by using, for instance, an authenticated encryption scheme, over the object data combined with a version number.

A backup token may be utilised to facilitate the encryption and/or decryption of the TEE data. The encryption token is suitably generated by the TEE at the behest of the REE.

The backup token suitably comprises a cryptographic signature performed by the TEE, using a TEE private (e.g. RSA) or secret key, over the version numbers of all the objects, meaning that the backup copy is indeed intended to be a backup by the end-user.

In order to prevent a malware from asking the creation of this token, the TEE may use the Trusted User Interface facility, consisting in taking control over the input and the display, in order to obtain secure validation from the end-user. The backup token may also contain additional information such as a date of backup.

In order that the backed-up TEE data can be restored to a different device, i.e. to a device having a different TEE key to the TEE from which the TEE data was backed-up, an application in the REE, such as the companion program, may pass a certificate of the target device (on which the restore will happen) containing a public key. This certificate can then be verified by the TEE, for example, using a usual chain of certificates going up to a root certificate trusted by the TEE, and additionally, by using a Trusted User Interface, user confirmation can be requested.

Once this certificate is verified, the TEE may encrypt the secret keys used for encryption and MAC of the different objects stored using the public key from the certificate (namely, the TEE generates a random secret key, encrypts it with the public key, and uses this random secret to encrypt the different keys used to encrypt and compute the MAC values for the objects that are backed up). The TEE passes these key data to the companion program.

For the restore phase, the difference with the first embodiment TEE is that the target TEE first decrypts the key data, and uses these key data to decrypt and verify the different objects during the restore procedure.

Embodiments of the invention are illustrated by way of example, and not by way of limitation, in the figures of the accompanying drawings, in which like reference numerals refer to similar elements and in which:
Figure 1 is a schematic block diagram of a system with a TEE;
Figure 2 shows the components involved in the backup and restore of a system as shown in Figure 1;
Figure 3 is a flowchart for the creation of a backup; and
Figure 4 is a flowchart for the restore operation.

As mentioned above, one major drawback of the GlobalPlatform standard is the absence of any recovery mechanism in case the TEE data stored in the non-volatile storage are corrupted or deleted. Existing solutions, in case of discovery of corruption in the data, wipe out the corrupted data (corrupted objects stored by the TEE or even the full non-volatile storage of the TEE). Also, no mechanism for restoring the contents has been specified in the GlobalPlatform^{RTM} standard. In the following description of two embodiments of the invention, and in the appended drawings, the following abbreviations and acronyms are used:
DDR: Dual Data rate Random Access Memory, for instance an external volatile memory;
eMMC: Embedded MMC flash, for instance external non-volatile memory;
eSRAM: Embedded Static Random Access Memory, for instance on-chip volatile memory;
HMAC: Hash-based Message Authentication Code;
MAC: Message Authentication Code - sort of digital signature based on symmetric cryptography, the key computing the MAC being the same as the one used to verify it;
OTP: One-Time Programmable memory;
OS: Operating System;
TEE: Trusted Execution Environment; and
REE: Rich Execution Environment.

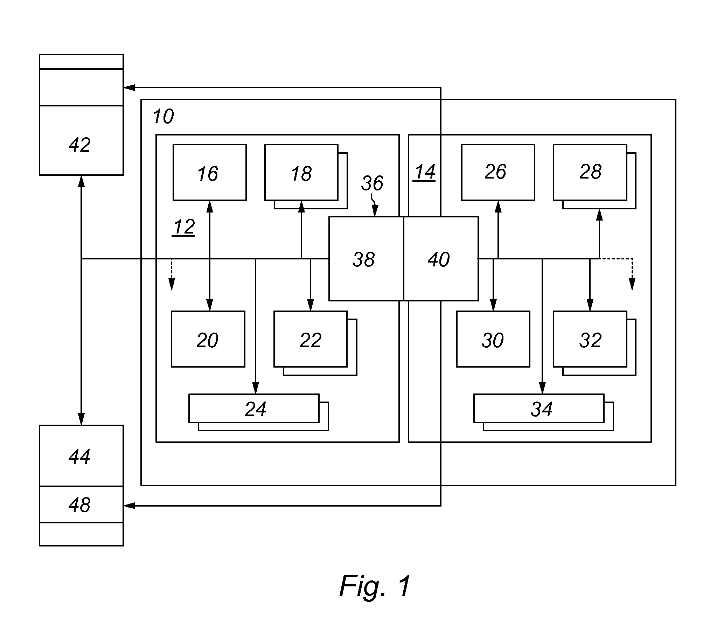

Figure 1 is a schematic block diagram of a system 10 with a REE 12 (on the left side of Figure 1) and a TEE 14 (on the right side of Figure 1), having similar architectures. The REE 12 comprises a public RAM 16, public cryptographic accelerators 18, a public ROM 20, public peripherals 22 and public OTP fields 24. Likewise, the TEE 14 comprises a trusted RAM 26, public cryptographic accelerators 28, a public ROM 30, public peripherals 32 and public OTP fields 34. The REE 12 and TEE share a physical processor 36, which is virtually divided into public processing cores 38 accessible by the REE 12, and trusted processing cores 40 only accessible by the TEE 14. The system 10 can access an external volatile memory 42 and an external non-volatile memory 44, each of which comprises a protected memory space 46, 48, which can only be accessed by the trusted processing core(s) 40 of the TEE 14.

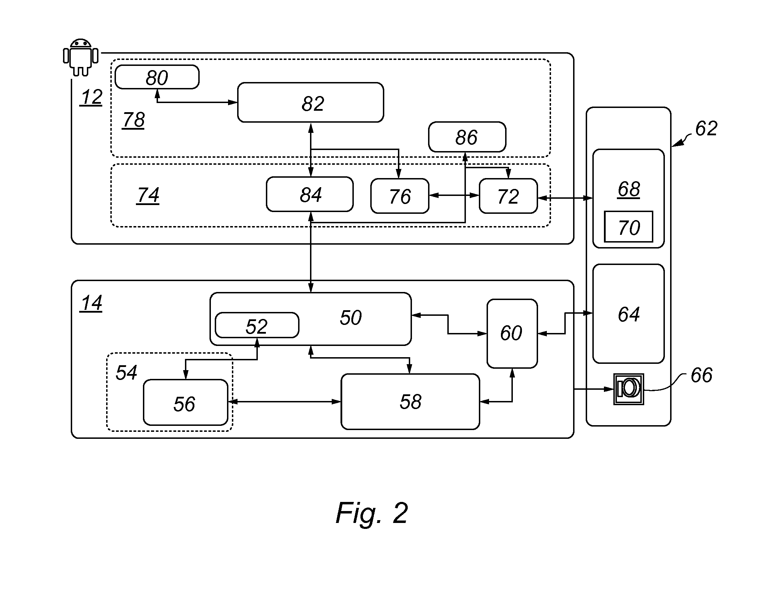

Figure 2 is a block diagram showing the architecture involved in the backup and restore of a system operating the invention, such as that shown in Figure 1. In Figure 2, there is shown a bi-layer architecture comprising a TEE 14 and a REE 12, such as an Android^{RTM} operating system. The TEE 14 has a TEE core 50 with a TEE manager 52, which provides an interface between the TEE core 50 and a secure user area 54 within which trusted applications 56 are executed in the runtime. An encryption module 58, such as a GlobalPlatform^{RTM} TEE API, provides security between the TEE 14 and Trusted Storage, Cryptographic modules and a Trusted User Interface (not shown), and provides a secure interface between the TEE core 50 and the hardware layer 60. The TEE 14 is thus able to interface securely with shared hardware 62, via a reciprocal hardware cryptography engine 64 and the OTP 66 of the shared hardware 62.

The shared hardware 62 is likewise shared with the REE 12, via an eMMC 68, which contains some protected space 70, and which interfaces with an eMMC driver 72 within the kernel 74 of the REE 12, which also contains file system data 76. The REE also has a user area 78, which runs user applications 80, such as companion software that interfaces with a backup and restore agent 82 within the open, user area 78 of the REE 12. The restore agent 82 interfaces with a TEE kernel device driver 84, which provides an interface between the REE 12 and the TEE 14. A storage helper 86 is also provided within the user area 78 of the REE 12.

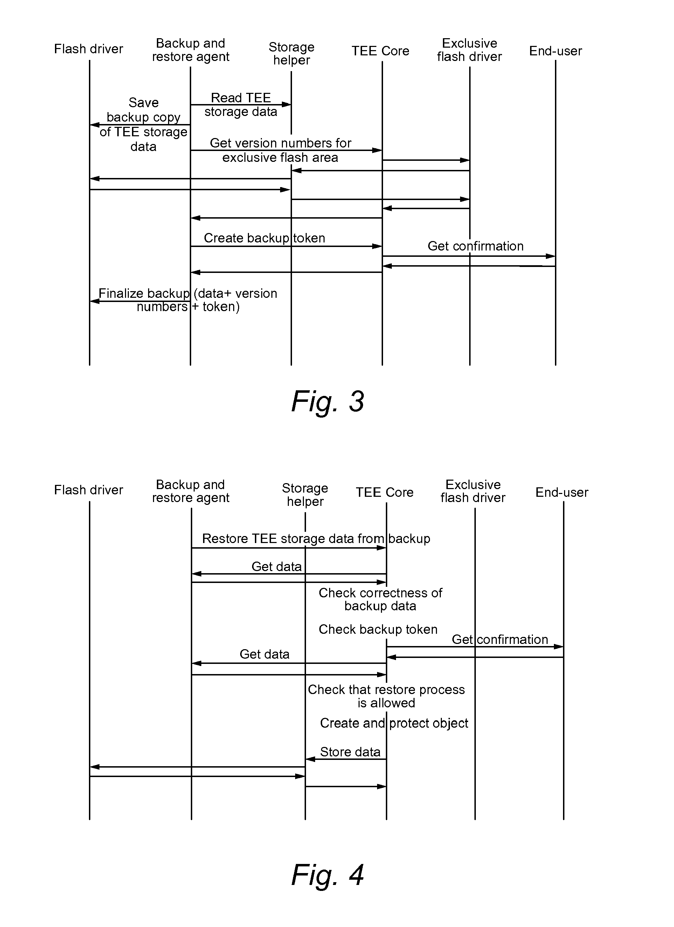

Figure 3 is a flowchart illustrating the method steps carried out by the components of the system as shown in Figure 2, during the creation of a backup and Figure 4 is a flowchart of the method steps carried out by the components of the system as shown in Figure 2, during the restore operation.

The TEE stores data in the form of binary objects encrypted using keys derived from a key that is available to the TEE only (for instance, a random key programmed at production time in a one-time-programmable memory that is readable by the TEE only). The object data are integrity-protected using a MAC function (e.g. an HMAC) that binds the data with a version number, using keys derived from the key available to the TEE only, mentioned above. The MAC value is stored together with the encrypted object data in the Rich OS non-volatile storage. The version number is stored in a specific non-volatile storage that is accessible to the TEE only. If an attacker from the Rich OS modifies the data and/or the MAC value, this will be detected by the TEE when reading back the data and the MAC. Similarly, if an attacker replaces these data and value with old, valid values, this will be detected by the TEE by using the version number. There are several other ways to protect the data with the same security properties, by using, for instance, an authenticated encryption scheme, over the object data combined with a version number.

In order to create a backup, the end-user may use a TEE companion program, running in the Rich OS, to copy the TEE storage data - consisting for instance of the data and MAC values stored in the Rich OS, plus the version numbers that the TEE companion program obtains from the TEE.

In one embodiment, the TEE companion program may ask the TEE to create a "backup token", which is a cryptographic signature performed by the TEE, using a TEE private (e.g. RSA) or secret key, over the version numbers of all the objects, meaning that the backup copy is indeed intended to be a backup by the end-user. In order to prevent a malware from asking the creation of this token, the TEE may use the Trusted User Interface facility, consisting in taking control over the input and the display, in order to obtain secure validation from the end-user. The backup token may also contain additional information such as a date of backup.

When the end-user wants to restore the TEE storage using a previous backup, the following steps are performed:
○ the end-user asks the companion program to restore the previous backup,
○ the companion program pushes the backup data to the TEE - practically, it gives read access to the data to the TEE,
○ in the embodiment wherein a backup token is created during the backup procedure, the TEE checks the backup token to make sure that the data to be restored have been backed up for this purpose. Additional information from the token, such as the backup date, may also be securely displayed to the end user by using the Trusted User Interface facility. The Trusted User Interface facility may also be used to obtain secure validation of the restore request by the end-user.
○ the TEE performs a sanity check of the data to check that all MAC values are correct and correspond to the data, in order not to start a restore process that would fail,
○ once the backup is validated, the TEE performs the restore operation, for which it applies a security policy: for instance, some Trusted Applications may not authorize the restore of their data.

The restore operation proceeds as follows:
○ for each Trusted Applications whose data must be restored and is allowed to be restored, the TEE verifies the objects from the backup that belong to this Trusted Application, deletes all the data of this Trusted Application, and creates and stores the object for this Trusted Application, using the MAC value and the version number from the backup in order to avoid security issues due to collisions,
○ for Trusted Applications whose data cannot be restored, the TEE either deletes the Trusted Application data, or leaves them untouched, depending on the end-user choice (for instance, full restore operation with replacement of TEE storage, or restore for cherry-picked Trusted Applications).

As the TEE uses a device- specific key to encrypt and authenticate all the stored data, this embodiment is not suitable for transferring data from the TEE of one device to the TEE of another device.

The second embodiment is similar to the first embodiment as described in the foregoing, except that the backup data are created in a way that enables restoring these data on another device.

To this end, the companion program may first pass a certificate of the target device (on which the restore will happen) containing a public key. This certificate is verified by the TEE, using a usual chain of certificates going up to a root certificate trusted by the TEE, and additionally, by using the Trusted User Interface, user confirmation can be requested.

Once this certificate is verified, the TEE may encrypt the secret keys used for encryption and MAC of the different objects stored using the public key from the certificate (namely, the TEE generates a random secret key, encrypts it with the public key, and uses this random secret to encrypt the different keys used to encrypt and compute the MAC values for the objects that are backed up). The TEE passes these key data to the companion program. The rest of the backup procedure is as in the first embodiment.

For the restore phase, the difference with the first embodiment TEE is that the target TEE first decrypts the key data, and uses these key data to decrypt and verify the different objects during the restore procedure.

This second embodiment may be used both for backup and restore on the same TEE and device, or for transferring the contents stored in one TEE to another TEE.

Advantages of the invention may include:
that the backup and restore scheme does not require any external certification process: all keys used are already known to the TEE, and all the cryptographic material is generated by the TEE.
the usage of a backup token, and the secure user confirmation during the backup creation and the restore process.
the ability to use the system to perform a backup on one device and perform the restore operation on another device; and
maintaining security for the backup and restore process: plain data are never leaked out to another party than the TEE on which the restore operation is performed, and a malware could not trigger a backup and/or a restore alone, thanks to the usage of the Trusted User Interface.

The invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after either or both of the following a) conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method of backing-up Trusted Execution Environment data (TEE data) to a memory under the control of a Rich Execution Environment (REE memory) **characterised by**: the TEE comprising a TEE encryption key that is only accessible to the TEE; and by the steps of the TEE encrypting TEE data to be backed up using the TEE key and storing the encrypted data in the REE memory.

2. The method of claim 1, wherein encrypting the TEE data to be backed-up is in the form of binary objects encrypted using the TEE key.

3. The method of claim 2, further comprising the step of integrity-protecting the binary objects using a MAC function that binds the TEE data with a version number using the TEE key.

4. The method of claim 4, wherein the step of storing the encrypted data in the REE memory comprises storing the MAC value and the encrypted TEE data in the REE memory.

5. The method of claim 3 or claim 4, further comprising the step of storing the version number in a TEE memory that is accessible only to the TEE.

6. The method of any preceding claim, wherein the backup of the TEE data is created by copying the encrypted TEE data, MAC values and version numbers obtained from the TEE to the REE memory.

7. The method of any preceding claim, wherein the TEE data is encrypted using a key derived from the TEE key.

8. The method of any preceding claim, wherein the backup is created using a companion application executed in the REE.

9. The method of any preceding claim, further comprising the step of restoring the backed-up TEE data by the REE granting to the TEE read access to the backed-up TEE data stored in the REE memory, and the TEE copying selected encrypted data to the TEE and decrypting it using the TEE key.

10. The method of claim 9 when dependent on claim 8, wherein the application in the REE grants read access to the TEE of the encrypted TEE data, MAC values and version numbers obtained from the TEE stored in the REE memory, and wherein the TEE validates the backed-up TEE data by checking that all of the MAC values are correct and correspond to the encrypted TEE data; and wherein the TEE restores selected data in the TEE memory be decrypting the backed-up TEE data in the REE memory using the TEE key and by copying the said selected data to the TEE memory.

11. The method of claim 10, wherein the selected data comprises only data for a Trusted Application and wherein the selected of data is comprises the TEE verifying the objects from the backup that belong to the Trusted Application, deleting all of the data in the TEE memory for the said Trusted Application, and creating and storing an object for the said Trusted Application, using the MAC value and the version number from the backup.

12. The method of any preceding claim, further comprising the step of generating a backup token comprising a cryptographic signature performed by the TEE, using a key over the version numbers of all the objects.

13. The method of claim 12, wherein the key comprises any one or more of the group comprising: TEE private key, an RSA key; and a secret key.

14. The method of any preceding claim, wherein the TEE uses a Trusted User Interface facility that takes over control of the device's user input and the display, in order to obtain secure validation from the end-user.

15. The method of any of claim s8 to 14, wherein the companion application passes a certificate of a target device containing a public key, which certificate is verifiable by the TEE.

16. The method of claim 15, further comprising the step of the TEE encrypting the TEE keys used for encryption and MAC of the different objects stored using the public key from the certificate and the TEE passing these key data to the companion program.

17. The method of claim 16, when dependent on any of claims 9 to 15, wherein the target TEE decrypts the key data, and uses these key data to decrypt and verify the different objects during the restore procedure.
